# EUROPEAN PATENT APPLICATION

(11) **EP 4 664 537 A1**
(43) Date of publication of application: **17.12.2025**
(21) Application number: 23943466.5
(22) Date of filing: 25.12.2023
(51) Int. Cl.: H01M 4/13

(54) **NEGATIVE ELECTRODE PLATE, SECONDARY BATTERY, AND ELECTRIC DEVICE**

(30) Priority: 30.06.2023 CN 202310798451
(71) Applicant: Contemporary Amperex Technology Co., Limited, Ningde, Fujian 352100 (CN)
(72) Inventor: CHEN, Shuhua, Ningde, Fujian 352100 (CN); ZHANG, Wenmeng, Ningde, Fujian 352100 (CN); CHEN, Linhui, Ningde, Fujian 352100 (CN); LIU, Huihui, Ningde, Fujian 352100 (CN)
(74) Representative: Gong, Jinping
(86) International application number: PCT/CN2023/141611
(87) International publication number: WO 2025/000995

(57) **Abstract**

Provided are a negative electrode plate, a secondary battery, and an electrical apparatus. The negative electrode plate comprises a negative electrode current collector and a negative electrode film layer located on at least one side of the negative electrode current collector, and the negative electrode film layer comprises a binder, wherein the negative electrode film layer comprises a first region and a second region, and the mass ratio of the binder in the first region to the binder in the second region is 0.1-1.4. The first region is a region that extends from a surface on a side of the negative electrode film layer away from the negative electrode current collector towards the interior of the negative electrode film layer by a distance within h/2, the second region is a region that extends from a surface on a side of the negative electrode film layer close to the negative electrode current collector towards the first region by a distance within h/2, and h represents a thickness of the negative electrode film layer.

## Description

### CROSS-REFERENCE TO RELATED APPLICATIONS

The present application claims priority to Chinese Patent Application No. 202310798451.3, filed on June 30, 2023 and entitled "NEGATIVE ELECTRODE PLATE, SECONDARY BATTERY, AND ELECTRICAL APPARATUS", which is incorporated herein by reference in its entirety.

### TECHNICAL FIELD

The present application relates to the technical field of secondary batteries, and in particular, to a negative electrode plate, a secondary battery, and an electrical apparatus.

### BACKGROUND

In recent years, secondary batteries have been widely used in energy storage power systems such as water power stations, thermal power stations, wind power stations, and solar power stations, and in a plurality of fields such as electric tools, electric bicycles, electric motorcycles, electric vehicles, military equipment, and aerospace.

The performance of a negative electrode plate has a key influence on the performance of a secondary battery. At present, negative electrode plates have many defects, which cannot satisfy the application needs of the new generation electrochemical systems.

### SUMMARY

The present application is made in view of the above problems, with the aim to provide a negative electrode plate. The mass ratio of a binder in a first region to the binder in a second region in the negative electrode plate is less than or equal to 1.4, so that the degree of aggregation of the binder in the first region is reduced, which is beneficial to reducing the direct current resistance of a battery and improving the electrical performance of the battery.

A first aspect of the present application provides a negative electrode plate. The negative electrode plate includes a negative electrode current collector and a negative electrode film layer located on at least one side of the negative electrode current collector. The negative electrode film layer includes a binder.

The negative electrode film layer includes a first region and a second region. The mass ratio of the binder in the first region to the binder in the second region is 0.1-1.4. The first region is a region that extends from a surface on a side of the negative electrode film layer away from the negative electrode current collector towards the interior of the negative electrode film layer by a distance within h/2, the second region is a region that extends from a surface on a side of the negative electrode film layer close to the negative electrode current collector towards the first region by a distance within h/2, and h represents a thickness of the negative electrode film layer.

The mass ratio of the binder in the first region to the binder in the second region is controlled to be 0.1-1.4, so as to reduce the degree of aggregation of the binder in the first region, thus reducing the coating of the negative electrode active material with the binder in the first region, so that metal ions in a secondary battery can be better intercalated and deintercalated in the negative electrode plate, thereby improving the kinetic performance of the battery, reducing the direct current resistance of the battery, and improving the cycling performance of the battery. For example, in a lithium secondary battery, the mass ratio of the binder in the first region to the binder in the second region is controlled to be 0.1-1.4, which is beneficial to the intercalation and deintercalation of lithium ions in the negative electrode plate, thereby improving the kinetic performance of the lithium secondary battery and reducing the direct current resistance thereof, thus improving the lithium precipitation window on the surface of the negative electrode plate.

In any embodiment, the mass ratio of the binder in the first region to the binder in the second region is 0.6-1.

The mass ratio of the binder in the first region to the binder in the second region is further controlled to be 0.6-1, which can not only reduce the aggregation of the binder in the first region, but can also further achieve a balance between the binding performance of the negative electrode plate and the direct current resistance of the battery, thus comprehensively improving the cycling performance of the battery.

In any embodiment, the negative electrode plate is a negative electrode plate treated by electromagnetic induction heating.

The electromagnetic induction heating can effectively remove part of the binder in the first region, which can not only reduce the aggregation of the binder in the first region to thus reduce the direct current resistance of the battery, but can also retain the other part of the binder to maintain the binding in the negative electrode active material in the negative electrode film layer, so as to form the complete structure of the negative electrode plate.

In any embodiment, the binder includes a water-based binder, and the water-based binder includes one or more of styrene-butadiene rubber, polyamide, poly(acrylonitrile-acrylate), polyacrylate, and poly(styrene-acrylate); optionally, the water-based binder includes styrene-butadiene rubber.

In any embodiment, based on the total mass of the negative electrode film layer, the mass content of the binder in the first region is 0.18%-2%, optionally 0.3%-1%, and the mass content of the binder in the second region is 0.32%-3%, optionally 0.7%-2%.

In any embodiment, based on the total mass of the negative electrode film layer, the sum of the mass content of the binder in the first region and the mass content of the binder in the second region is 0.5%-5%, optionally 1%-3%.

Controlling the mass content of the binder in the first region in an appropriate range can not only make the battery have a relatively low direct current resistance, but can also bind the negative electrode active material to maintain the morphology of the negative electrode plate; and controlling the mass content of the binder in the second region in an appropriate range can not only make the negative electrode plate have excellent binding performance, but can also control the influence of the introduction of the binder on the direct current resistance of the battery.

In any embodiment, the negative electrode film layer further includes a negative electrode active material, and the negative electrode active material includes one or more of artificial graphite, natural graphite, soft carbon, hard carbon, a silicon-carbon composite, lithium titanate, and a silicon-oxygen composite.

A second aspect of the present application further provides a method for preparing a negative electrode plate, including:
preparing a negative electrode film layer on at least one side of a negative electrode current collector to obtain the negative electrode plate.

The negative electrode film layer includes a first region and a second region. The mass ratio of the binder in the first region to the binder in the second region is 0.1-1.4. The first region is a region that extends from a surface on a side of the negative electrode film layer away from the negative electrode current collector towards the interior of the negative electrode film layer by a distance within h/2, the second region is a region that extends from a surface on a side of the negative electrode film layer close to the negative electrode current collector towards the first region by a distance within h/2, and h represents a thickness of the negative electrode film layer.

The mass ratio of the binder in the first region to the binder in the second region is controlled to be 0.1-1.4, so as to reduce the aggregation of the binder in the first region, thus reducing the coating of the negative electrode active material with the binder in the first region, so that metal ions in a secondary battery can be better intercalated and deintercalated in the negative electrode plate, thereby improving the kinetic performance of the battery, reducing the direct current resistance of the battery, and improving the cycling performance of the battery. For example, in a lithium secondary battery, the mass ratio of the binder in the first region to the binder in the second region is controlled to be 0.1-1.4, which is beneficial to the intercalation and deintercalation of lithium ions in the negative electrode plate, thereby improving the kinetic performance of the lithium secondary battery and reducing the direct current resistance thereof, thus improving the lithium precipitation window on the surface of the negative electrode plate.

In any embodiment, the step of preparing the negative electrode film layer on the at least one side of the negative electrode current collector to obtain the negative electrode plate includes:
preparing a negative electrode film layer on at least one side of a negative electrode current collector to obtain the negative electrode plate; and
treating the negative electrode plate by electromagnetic induction heating to obtain the negative electrode plate treated by the electromagnetic induction heating.

The electromagnetic induction heating can effectively remove part of the binder in the first region, so that the mass ratio of the binder in the first region to the binder in the second region is reduced from 1.5-10 to 0.1-1.4, which can not only reduce the aggregation of the binder in the first region to thus reduce the direct current resistance of the battery, but can also retain the other part of the binder to maintain the binding in the negative electrode active material in the negative electrode film layer, so as to form the complete structure of the negative electrode plate.

In any embodiment, before the negative electrode plate is treated by the electromagnetic induction heating, the mass ratio of the binder in the first region to the binder in the second region is 1.5-10.

Before the negative electrode plate is treated by electromagnetic induction heating, the mass ratio of the binder in the first region to the binder in the second region is 1.5-10. Due to the aggregation of the binder in the first region, the direct current resistance of the battery is increased, which affects the electrical performance of the battery. After the negative electrode plate is treated by electromagnetic induction heating, the mass ratio of the binder in the first region to the binder in the second region can be 0.1-1.4, which significantly reduces the aggregation of the binder in the first region, reduces the direct current resistance of the battery, and improves the performance of the battery.

In any embodiment, the treatment of the negative electrode plate by the electromagnetic induction heating includes:
moving the negative electrode plate inside an energized coil.

A magnetic field can be generated inside the energized coil. The movement of the negative electrode plate inside the coil is equivalent to a movement of cutting the magnetic induction line in the magnetic field. Combining the electromagnetic induction theory and skin effect, the current density on the surface of the negative electrode plate is the largest. With the increase of the internal depth of the negative electrode plate, the current density thereof decreases significantly. Therefore, the current induction heating can effectively remove part of the binder in the first region, so as to reduce the aggregation of the binder in the first region, reduce the direct current resistance of the battery, and improve the electrical performance of the battery.

In any embodiment, during the treatment of the negative electrode plate by electromagnetic induction heating, the distance S between the coil and the negative electrode plate located in the central position inside the coil and the moving speed V of the negative electrode plate inside the energized coil satisfy 50 ≤ S × V ≤ 900, optionally, 100 ≤ S × V ≤ 800, wherein S represents the shortest distance between the coil and the negative electrode plate located in the central position inside the coil along a thickness direction of the negative electrode plate, the unit of S is cm, and the unit of V is m/min.

The distance S between the coil and the negative electrode plate located in the central position inside the coil and the moving speed V of the negative electrode plate inside the energized coil satisfy the above relational expression, so that the surface on the side of the negative electrode plate away from the negative electrode current collector has an appropriate temperature, which can effectively remove part of the binder in the first region, such that the mass ratio of the binder in the first region to the binder in the second region is 0.1-1.4, thus reducing the direct current resistance of the battery thereof and improving the cycling performance of the battery.

In any embodiment, the distance S between the coil and the negative electrode plate located in the central position inside the coil is 1-12 cm, optionally 5-10 cm.

In any embodiment, during the treatment of the negative electrode plate by electromagnetic induction heating, the moving speed V of the negative electrode plate inside the energized coil is 10-180 m/min, optionally 20-150 m/min.

In any embodiment, during the treatment of the negative electrode plate by electromagnetic induction heating, the surface temperature T on the side of the negative electrode plate away from the negative electrode current collector is 300-700°C, optionally 400-700°C.

The distance S between the coil and the negative electrode plate located in the central position inside the coil, the moving speed V of the negative electrode plate inside the energized coil, and the surface temperature T on the side of the negative electrode plate away from the negative electrode current collector are respectively controlled in appropriate ranges, so that not only can part of the binder in the first region can be removed to reduce the mass ratio of the binder in the first region to the binder in the second region in the first region to 0.1-1.4, but also the influence of the electromagnetic induction heating on the negative electrode active material can be reduced.

In any embodiment, the specific steps include:
uniformly mixing raw materials including a negative electrode active material and a binder with deionized water to prepare a negative electrode slurry, and applying the negative electrode slurry to a negative electrode current collector to prepare the negative electrode film layer, thereby obtaining the negative electrode plate; optionally, the raw materials further include sodium carboxymethyl cellulose; and
moving the negative electrode plate inside the energized coil to obtain the negative electrode plate treated by electromagnetic induction heating.

The mass ratio of the binder in the first region to the binder in the second region in the above negative electrode plate treated by electromagnetic induction heating is 0.1-1.4, which can effectively reduce the aggregation of the binder in the first region, reduce the direct current resistance of the battery, and improve the performance of the battery.

In any embodiment, the preparation method further includes a compaction treatment step, and the compaction treatment step is carried out before or after the negative electrode plate is treated by electromagnetic induction heating.

In any embodiment, the preparation method further includes a die-cutting treatment step, the die-cutting step is carried out after the compaction step, and the die-cutting treatment step is carried out before or after the treatment of the negative electrode plate by electromagnetic induction heating.

The step of treating the negative electrode plate by electromagnetic induction heating can be either before or after the compaction treatment step or the die-cutting treatment step. In both cases, the mass ratio of the binder in the first region to the binder in the second region can be 0.1-1.4 after the negative electrode plate is treated by electromagnetic induction heating.

A third aspect of the present application provides a secondary battery, including the negative electrode plate according to the first aspect of the present application or a negative electrode plate prepared by the preparation method according to the second aspect of the present application.

In any embodiment, the secondary battery includes one or more of a lithium secondary battery, a sodium secondary battery, and a potassium secondary battery.

A fourth aspect of the present application provides an electrical apparatus, including the secondary battery according to the third aspect of the present application.

### BRIEF DESCRIPTION OF THE DRAWINGS

FIG. 1 is a schematic view of a negative electrode plate according to an embodiment of the present application.
FIG. 2 is a schematic view of a secondary battery according to an embodiment of the present application;
FIG. 3 is an exploded view of the secondary battery according to an embodiment of the present application as shown in FIG. 2;
FIG. 4 is a schematic view of a battery module according to an embodiment of the present application;
FIG. 5 is a schematic view of a battery pack according to an embodiment of the present application;
FIG. 6 is an exploded view of the battery pack according to an embodiment of the present application as shown in FIG. 5; and
FIG. 7 is a schematic view of an electrical apparatus in which a secondary battery serves as a power source according to an embodiment of the present application.

Description of reference numerals:
1. Battery pack; 2. upper box; 3. lower box; 4. battery module; 5. secondary battery; 51 case; 52 electrode assembly; 53 cover plate; 501 negative electrode film layer, 5011 first region, 5012 second region; and 502 negative electrode current collector.

### DETAILED DESCRIPTION

Embodiments of the negative electrode plate, secondary battery, and electrical apparatus of the present application are specifically disclosed in detail below with appropriate reference to the detailed description of the accompanying drawings. However, there may be situations where unnecessary detailed explanations are omitted. For example, there are situations where detailed explanations of well-known matters and repeated explanations of actually the same structure are omitted. This is to prevent the following description from becoming unnecessarily lengthy and to facilitate the understanding of those skilled in the art. In addition, the drawings and subsequent descriptions are provided for those skilled in the art to fully understand the present application and are not intended to limit the subject matter defined in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer ≥ 2, it is equivalent to disclosing that the parameter is, for example, an integer of 2, 3, 4, 5, 6, 7, 8, 9, 10, 11, 12, etc.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all the steps in the present application can be carried out, either in order or randomly, preferably in order. For example, the method includes steps (a) and (b), which means that the method may include steps (a) and (b) performed in order, or may include steps (b) and (a) performed in order. For example, reference to "the method may further include step (c)" indicates that step (c) may be added to the method in any order, for example, the method may include steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. By way of example, the phrase "A or B" indicates "A, B, or both A and B". More specifically, any one of the following conditions satisfies the condition "A or B": A is true (or present) and B is false (or not present); A is false (or not present) and B is true (or present); or both A and B are true (or present).

At present, a negative electrode film layer in a negative electrode plate has the phenomenon of uneven distribution of a binder in thickness. For example, in the direction from close to the negative electrode current collector to away from the negative electrode current collector, the proportion of styrene-butadiene rubber binder in the negative electrode film layer gradually increases. Since the styrene-butadiene rubber binder is aggregated on the side of the negative electrode plate away from the negative electrode current collector, the resistance increases, affecting the electrical performance of the battery. Therefore, there is a need to provide a new negative electrode plate to make the battery satisfy the need for the new generation of electrochemical system.

### [Negative electrode plate]

On this basis, the present application provides a negative electrode plate. The negative electrode plate includes a negative electrode current collector and a negative electrode film layer located on at least one side of the negative electrode current collector. The negative electrode film layer includes a binder.

The negative electrode film layer includes a first region and a second region. The mass ratio of the binder in the first region to the binder in the second region is 0.1-1.4. The first region is a region that extends from a surface on a side of the negative electrode film layer away from the negative electrode current collector towards the interior of the negative electrode film layer by a distance within h/2, the second region is a region that extends from a surface on a side of the negative electrode film layer close to the negative electrode current collector towards the first region by a distance within h/2, and h represents a thickness of the negative electrode film layer. In some embodiments, the binder includes a water-based binder, and the water-based binder includes one or more of styrene-butadiene rubber, polyamide, poly(acrylonitrile-acrylate), polyacrylate, and poly(styrene-acrylate); in some embodiments, the water-based binder includes styrene-butadiene rubber.

In some embodiments, the negative electrode film layer further includes a negative electrode active material, and the negative electrode active material includes one or more of artificial graphite, natural graphite, soft carbon, hard carbon, a silicon-carbon composite, lithium titanate, and a silicon-oxygen composite.

In some embodiments, the negative electrode film layer further includes optionally a conductive agent. The conductive agent can include at least one of superconducting carbon, acetylene black, carbon black, Ketjen black, carbon dots, carbon nanotubes, graphene, and carbon nanofibers.

In some embodiments, the negative electrode film layer further includes optionally other auxiliaries, for example, a thickener (such as sodium carboxymethyl cellulose (CMC-Na)).

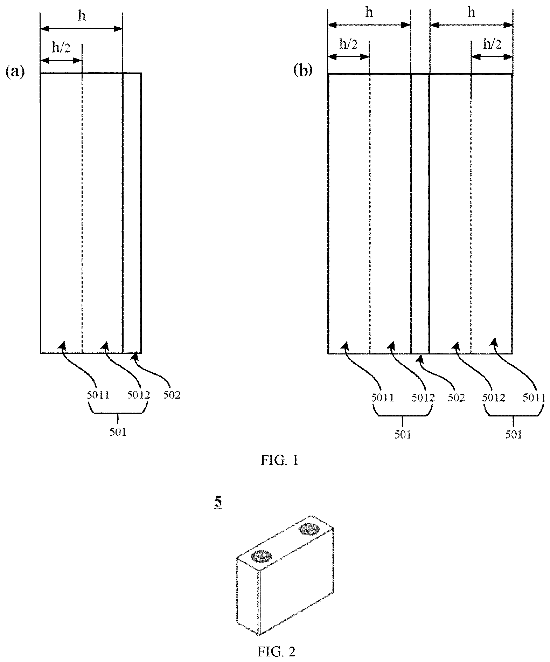

In some embodiments, the negative electrode plate includes a negative electrode current collector and a negative electrode film layer located on one side of the negative electrode current collector. As shown in FIG. 1(a), the negative electrode plate includes a negative electrode current collector 502 and a negative electrode film layer 501 located on one side of the negative electrode current collector 502. The negative electrode film layer includes a first region 5011 and a second region 5012. The first region 5011 is a region that extends from a surface on a side of the negative electrode film layer 501 away from the negative electrode current collector 502 towards the interior of the negative electrode film layer 501 by a distance within h/2, and the second region 5012 is a region that extends from a surface on a side of the negative electrode film layer 501 close to the negative electrode current collector 502 towards the first region 5011 by a distance within h/2.

In some embodiments, the negative electrode plate includes a negative electrode current collector and negative electrode film layers located on the opposite two sides of the negative electrode current collector. As shown in FIG. 1(b), the negative electrode plate includes a negative electrode current collector 502 and negative electrode film layers 501 located on the opposite two sides of the negative electrode current collector. The negative electrode film layer 501 includes a first region 5011 and a second region 5012. The first region 5011 is a region that extends from a surface on a side of the negative electrode film layer 501 away from the negative electrode current collector 502 towards the interior of the negative electrode film layer 501 by a distance within h/2, and the second region 5012 is a region that extends from a surface on a side of the negative electrode film layer 501 close to the negative electrode current collector 502 towards the first region 5011 by a distance within h/2.

In some embodiments, the negative electrode plate further includes a coating layer located between the negative electrode current collector and the negative electrode film layer. The coating layer includes at least one of superconducting carbon, acetylene black, carbon black, Ketjen black, carbon dots, carbon nanotubes, graphene, and carbon nanofibers. The coating layer further includes styrene-butadiene rubber. The thickness of the coating layer can be optionally 0.5 µm, 0.55 µm, 0.6 µm, 0.65 µm, 0.7 µm, 0.75 µm, 0.8 µm, 0.95 µm, 0.9 µm, 0.95 µm, 1 µm, or a numerical value in a range formed by any two of the above points.

In some embodiments, the mass ratio of the binder in the first region to the binder in the second region in the first region can be optionally 0.1, 0.2, 0.3, 0.4, 0.5, 0.6, 0.7, 0.75, 0.8, 0.85, 0.9, 0.95, 1.0, 1.1, 1.2, 1.3, 1.4, or a numerical value in a range formed by any two of the above points.

Herein, the term "water-based binder" refers to the use of water as a dispersant to disperse the binder in water and includes but is not limited to styrene-butadiene rubber, polyamide, poly(acrylonitrile-acrylate), polyacrylate, or poly(styrene-acrylate).

Herein, the mass ratio of the binder in the first region to the binder in the second region can be tested by any well-known method. By way of example, a differential scanning thermogravimetric analyzer is used for testing. The test instrument is STA449F3 differential scanning thermogravimetric analyzer, and the specific testing procedure is as follows: the thickness of the negative electrode film layer in the negative electrode plate is measured; a double-sided adhesive tape is taken to bind the surface of the negative electrode plate to be tested, a roller is then used to roll over the negative electrode plate three times in the same direction, the double-sided adhesive tape is peeled off, and the powder adhered to the tape is regarded as the powder of the first region (note: the thickness of the first region peeled off by the adhesive tape should be 1/2 of the thickness of the negative electrode film layer, and the specific operation involves measuring the thickness of the film layer remaining on the negative electrode plate. If the ratio of the thickness of the film layer remaining on the negative electrode plate to the thickness of the negative electrode film layer is less than 1/2, continued binding is carried out with the adhesive tape.); and the powder remaining on the negative electrode plate is scraped off gently with a scraper, and this part of powder is regarded as the powder in the second region, wherein care should be taken not to scrape the copper foil. The powders in the upper and lower layers are tested respectively according to the following steps to obtain the content of the binder in the upper and lower layers. The testing steps are as follows: about 50 mg of a sample is weighed into an Al₂O₃ crucible and shaken flat; parameter settings: nitrogen atmosphere, purge gas 60 mL/min, and shielding gas 20 mL/min; temperature program: 10°C/min, 35-600°C. It is ensured that the sample is fully dispersed, a thermogravimetric-temperature change graph is then plotted. The weight loss range of the binder is 300-600°C. The contents of the binder in the first region/second region are obtained separately. Thus, the mass ratio of the binder in the first region/second region is calculated.

The mass ratio of the binder in the first region to the binder in the second region is controlled to be 0.1-1.4, so as to reduce the degree of aggregation of the binder in the first region, thus reducing the coating of the negative electrode active material with the binder in the first region, so that metal ions in a secondary battery can be better intercalated and deintercalated in the negative electrode plate, thereby improving the kinetic performance of the battery, reducing the direct current resistance of the battery, and improving the cycling performance of the battery. For example, in a lithium secondary battery, the mass ratio of the binder in the first region to the binder in the second region is controlled to be 0.1-1.4, which is beneficial to the intercalation and deintercalation of lithium ions in the negative electrode plate, thereby improving the kinetic performance of the lithium secondary battery and reducing the direct current resistance thereof, thus improving the lithium precipitation window on the surface of the negative electrode plate.

In some embodiments, the mass ratio of the binder in the first region to the binder in the second region is 0.6-1.

The mass ratio of the binder in the first region to the binder in the second region is further controlled to be 0.6-1, which significantly reduces the aggregation of the binder in the first region and can further achieve a balance between the binding performance of the negative electrode plate and the direct current resistance of the battery, thus comprehensively improving the cycling performance of the battery.

In some embodiments, the negative electrode plate is a negative electrode plate treated by electromagnetic induction heating.

The electromagnetic induction heating can effectively remove part of the binder in the first region, which can not only reduce the aggregation of the binder in the first region to thus reduce the direct current resistance of the battery, but can also retain the other part of the binder to maintain the binding in the negative electrode active material in the negative electrode film layer.

In some embodiments, based on the total mass of the negative electrode film layer, the mass content of the binder in the first region is 0.18%-2%. In some embodiments, based on the total mass of the negative electrode film layer, the mass content of the binder in the first region is 0.3%-1%. In some embodiments, based on the total mass of the negative electrode film layer, the mass content of the binder in the second region is 0.32%-3%. In some embodiments, based on the total mass of the negative electrode film layer, the mass content of the binder in the second region is 0.7%-2%. In some embodiments, based on the total mass of the negative electrode film layer, the mass content of the binder in the first region is 0.18%, 0.2%, 0.4%, 0.5%, 0.6%, 0.8%, 1.0%, 1.2%, 1.4%, 1.5%, 1.6%, 1.8%, 2%, or a numerical value in a range formed by any two of the above points. In some embodiments, based on the total mass of the negative electrode film layer, the mass content of the binder in the second region is 0.32%, 0.4%, 0.5%, 0.6%, 0.8%, 1.0%, 1.2%, 1.4%, 1.5%, 1.6%, 1.8%, 2%, 2.2%, 2.4%, 2.5%, 2.6%, 2.8%, 3%, or a numerical value in a range formed by any two of the above points.

In some embodiments, based on the total mass of the negative electrode film layer, the sum of the mass content of the binder in the first region and the mass content of the binder in the second region is 0.5%-5%. In some embodiments, based on the total mass of the negative electrode film layer, the sum of the mass content of the binder in the first region and the mass content of the binder in the second region is 1%-3%. In some embodiments, based on the total mass of the negative electrode film layer, the sum of the mass content of the binder in the first region and the mass content of the binder in the second region is 0.5%, 1%, 1.5%, 2%, 2.5%, 3%, 3.5%, 4%, 4.5%, 5%, or a numerical value in a range formed by any two of the above points.

Controlling the mass content of the binder in the first region in an appropriate range can not only make the battery have a relatively low direct current resistance, but can also bind the negative electrode active material to maintain the morphology of the negative electrode plate; and controlling the mass content of the binder in the second region in an appropriate range can not only make the negative electrode plate have excellent binding performance (the bonding force between the negative electrode film layer and the negative electrode current collector), but can also control the influence of the introduction of the binder on the direct current resistance of the battery.

The present application further provides a method for preparing a negative electrode plate, including:
preparing a negative electrode film layer on at least one side of a negative electrode current collector to obtain the negative electrode plate.

The negative electrode film layer includes a first region and a second region. The mass ratio of the binder in the first region to the binder in the second region is 0.1-1.4. The first region is a region that extends from a surface on a side of the negative electrode film layer away from the negative electrode current collector towards the interior of the negative electrode film layer by a distance within h/2, the second region is a region that extends from a surface on a side of the negative electrode film layer close to the negative electrode current collector towards the first region by a distance within h/2, and h represents a thickness of the negative electrode film layer.

The mass ratio of the binder in the first region to the binder in the second region is controlled to be 0.1-1.4, so as to reduce the aggregation of the binder in the first region, thus reducing the coating of the negative electrode active material with the binder in the first region, so that metal ions in a secondary battery can be better intercalated and deintercalated in the negative electrode plate, thereby improving the kinetic performance of the battery, reducing the direct current resistance of the battery, and improving the cycling performance of the battery. For example, in a lithium secondary battery, the mass ratio of the binder in the first region to the binder in the second region is controlled to be 0.1-1.4, which is beneficial to the intercalation and deintercalation of lithium ions in the negative electrode plate, thereby improving the kinetic performance of the lithium secondary battery and reducing the direct current resistance thereof, thus improving the lithium precipitation window on the surface of the negative electrode plate.

In some embodiments, the step of preparing the negative electrode film layer on the at least one side of the negative electrode current collector to obtain the negative electrode plate includes:
preparing a negative electrode film layer on at least one side of a negative electrode current collector to obtain the negative electrode plate; and
treating the negative electrode plate by electromagnetic induction heating to obtain the negative electrode plate treated by the electromagnetic induction heating.

The electromagnetic induction heating can effectively remove part of the binder in the first region, so that the mass ratio of the binder in the first region to the binder in the second region is reduced from 1.5-10 to 0.1-1.4, which can not only reduce the aggregation of the binder in the first region to thus reduce the direct current resistance of the battery, but can also retain the other part of the binder to maintain the binding in the negative electrode active material in the negative electrode film layer.

In some embodiments, before the negative electrode plate is treated by the electromagnetic induction heating, the mass ratio of the binder in the first region to the binder in the second region is 1.5-10. In some embodiments, before the negative electrode plate is treated by electromagnetic induction heating, the mass ratio of the binder in the first region to the binder in the second region can be 1.5, 2, 2.5, 3, 3.5, 4, 4.5, 5, 5.5, 6, 6.5, 7, 7.5, 8, 8.5, 9, 9.5, 10, or a numerical value in a range formed by any two of the above points.

Before the negative electrode plate is treated by electromagnetic induction heating, the mass ratio of the binder in the first region to the binder in the second region is 1.5-10. Due to the aggregation of the binder in the first region, the direct current resistance of the battery is increased, which affects the electrical performance of the battery. After the negative electrode plate is treated by electromagnetic induction heating, the mass ratio of the binder in the first region to the binder in the second region can be 0.1-1.4, which significantly reduces the aggregation of the binder in the first region, reduces the direct current resistance of the battery, and improves the performance of the battery.

In some embodiments, the treatment of the negative electrode plate by the electromagnetic induction heating includes:
moving the negative electrode plate inside an energized coil.

Herein, the shape of the coil is square, and the number of coils can be one.

It can be understood that a magnetic field can be generated inside the energized coil. For example, a changing magnetic field can be generated inside the coil with an alternating current. The movement of the negative electrode plate inside the coil is equivalent to a movement of further cutting the magnetic induction line in the magnetic field. Combining the electromagnetic induction theory and skin effect, the current density on the surface of the negative electrode plate is the largest. With the increase of the internal depth of the negative electrode plate, the current density thereof decreases significantly. That is, the temperature on the surface of the negative electrode plate can rise rapidly, while for the temperature inside the negative electrode plate, with the increase of depth, the degree of rise of the temperature rise gradually weakens. Therefore, the current induction heating can effectively remove part of the binder in the first region, and the removed amount of the binder in the second region by current induction heating is far less than the removed amount of the binder in the first region, thereby achieving the effect of reducing the aggregation of the binder in the first region, thus reducing the direct current resistance of the battery and improving the electrical performance of the battery.

In addition, when both sides of the negative electrode current collector are provided with the negative electrode film layer, electromagnetic induction heating can acts on the negative electrode film layers on both sides of the negative electrode plate simultaneously, and the influence of the electromagnetic induction heating on the negative electrode current collector is negligible, which greatly saves the treatment time and cost.

In some embodiments, during the treatment of the negative electrode plate by electromagnetic induction heating, the distance S between the coil and the negative electrode plate located in the central position inside the coil and the moving speed V of the negative electrode plate inside the energized coil satisfy 50 ≤ S × V ≤ 900, wherein S represents the shortest distance between the coil and the negative electrode plate located in the central position inside the coil along a thickness direction of the negative electrode plate, the unit of S is cm, and the unit of V is m/min. In some embodiments, the distance S between the coil and the negative electrode plate located in the central position inside the coil and the moving speed V of the negative electrode plate inside the energized coil satisfy 100 ≤ S × V ≤ 800. In some embodiments, during the treatment of the negative electrode plate by electromagnetic induction heating, the distance S between the coil and the negative electrode plate located in the central position inside the coil and the moving speed V of the negative electrode plate inside the energized coil satisfy S × V of optionally 50, 100, 150, 200, 250, 300, 350, 400, 450, 500, 550, 600, 650, 700, 750, 800, 850, 900, or a numerical value in a range formed by any two of the above points.

Herein, S × V refers to the product of the numerical values between S and V, with the unit of S being cm and the unit of V being m/min.

Herein, during the treatment of the negative electrode plate by electromagnetic induction heating, the negative electrode plate is located in the central position inside the coil. The plane where the coil is located coincides with the thickness direction of the negative electrode plate, and the four sides of the coil are perpendicular or parallel to the thickness direction of the negative electrode plate. That is to say, the plane where the coil is located is perpendicular to the surface of the negative electrode plate (the surface of the negative electrode plate is a plane perpendicular to the thickness direction of the negative electrode plate), and the perpendicular distances from two sides of the coil parallel to the surface of the negative electrode plate to the negative electrode plate are equal.

Herein, the term "the distance S between the coil and the negative electrode plate located in the central position inside the coil" refers to the distance from the coil to the surface of the negative electrode plate in the thickness direction of the negative electrode plate, wherein the negative electrode plate is located in the central position inside the coil.

Herein, the term "the moving speed V of the negative electrode plate inside the energized coil" refers to the moving speed of the negative pole plate in the direction perpendicular to the plane where the coil is located, wherein the negative electrode plate is located in the center of the coil. That is, the plane where the coil is located is perpendicular to the moving direction of the negative pole plate inside the coil.

It can be understood that the greater the distance S between the coil and the negative electrode plate located in the central position inside the coil, the less favorable for the temperature of the surface on the side of the negative electrode plate away from the negative electrode current collector to rise; and the greater the moving speed V of the negative electrode plate inside the energized coil, the less favorable for the temperature of the surface on the side of the negative electrode plate away from the negative electrode current collector to rise. The distance S between the coil and the negative electrode plate located in the central position inside the coil and the moving speed V of the negative electrode plate inside the energized coil satisfy the above relational expression, so that the surface on the side of the negative electrode plate away from the negative electrode current collector has an appropriate temperature, which can effectively remove part of the binder in the first region, such that the mass ratio of the binder in the first region to the binder in the second region is 0.1-1.4.

In some embodiments, the distance S between the coil and the negative electrode plate located in the central position inside the coil is 1-12 cm. In some embodiments, the distance S between the coil and the negative electrode plate located in the central position inside the coil is 5-10 cm. In some embodiments, the distance S between the coil and the negative electrode plate located in the central position inside the coil is optionally 1 cm, 2 cm, 3 cm, 4 cm, 5 cm, 6 cm, 7 cm, 8 cm, 9 cm, 10 cm, 11 cm, 12 cm, or a numerical value in a range formed by any two of the above points.

In some embodiments, during the treatment of the negative electrode plate by electromagnetic induction heating, the moving speed V of the negative electrode plate inside the energized coil is 10-180 m/min. In some embodiments, during the treatment of the negative electrode plate by electromagnetic induction heating, the moving speed V of the negative electrode plate inside the energized coil is 20-150 m/min. In some embodiments, during the treatment of the negative electrode plate by electromagnetic induction heating, the moving speed V of the negative electrode plate inside the energized coil is optionally 10 m/min, 20 m/min, 30 m/min, 40 m/min, 50 m/min, 60 m/min, 70 m/min, 80 m/min, 90 m/min, 100 m/min, 110 m/min, 120 m/min, 130 m/min, 140 m/min, 150 m/min, 160 m/min, 170 m/min, 180 m/min, or a numerical value in a range formed by any two of the above points.

In some embodiments, during the treatment of the negative electrode plate by electromagnetic induction heating, the surface temperature T on the side of the negative electrode plate away from the negative electrode current collector is 300-700°C. In some embodiments, during the treatment of the negative electrode plate by electromagnetic induction heating, the surface temperature T on the side of the negative electrode plate away from the negative electrode current collector is 400-700°C. In some embodiments, during the treatment of the negative electrode plate by electromagnetic induction heating, the surface temperature T on the side of the negative electrode plate away from the negative electrode current collector is optionally 300°C, 350°C, 400°C, 450°C, 500°C, 550°C, 600°C, 650°C, 700°C, or a value in a range formed by any two of the above points.

It can be understood that since the negative electrode plate moves inside the coil after an alternating current is applied, the surface of the negative electrode plate has a relatively large current density, and the negative electrode plate can be heated in a short time to rapidly increase the surface temperature of the negative electrode plate. The distance S between the coil and the negative electrode plate located in the central position inside the coil and the moving speed V of the negative electrode plate inside the energized coil can be controlled such that the surface temperature T on the side of the negative electrode plate away from the negative electrode current collector is in an appropriate range.. The surface temperature of the negative electrode plate can be measured by a temperature sensor. In addition, the decomposition temperature and reaction temperature of the negative electrode active material are both higher than 800°C. Therefore, the surface temperature T of the negative electrode plate is less than or equal to 700°C, which can decompose the binder, but the influence on the negative electrode active material is negligible.

The distance S between the coil and the negative electrode plate located in the central position inside the coil, the moving speed V of the negative electrode plate inside the energized coil, and the surface temperature T on the side of the negative electrode plate away from the negative electrode current collector are respectively controlled in appropriate ranges, so that not only can part of the binder in the first region can be removed to reduce the mass ratio of the binder in the first region to the binder in the second region in the first region to 0.1-1.4, but also the influence of the electromagnetic induction heating on the negative electrode active material can be reduced.

In some embodiments, the specific steps include:
uniformly mixing raw materials including a negative electrode active material and a binder with deionized water to prepare a negative electrode slurry, and applying the negative electrode slurry to a negative electrode current collector to prepare the negative electrode film layer, thereby obtaining the negative electrode plate, wherein in some embodiments, the raw materials further include sodium carboxymethyl cellulose; and
moving the negative electrode plate inside the energized coil to obtain the negative electrode plate treated by electromagnetic induction heating.

It can be understood that during the process of applying the negative electrode slurry to the negative electrode current collector and drying the negative electrode slurry to prepare the negative electrode film layer, due to the affinity problem between the binder and the negative electrode active material, there may be a problem that the upward flow of the solvent drives the binder to float upward during solvent evaporation, leading to the enrichment of the binder on the surface on the side of the negative electrode plate away from the negative electrode current collector, thus leading to the increase of the direct current resistance of the battery; in addition, the enrichment of the binder on the surface of the negative electrode plate may also lead to serious adhesion between the negative electrode film layer on the negative electrode plate and the roller during the subsequent rolling of the negative electrode plate, which leads to the damage of the negative electrode plate. In some embodiments of the present application, treating the negative electrode plate by electromagnetic induction heating can effectively remove part of the binder in the first region. The mass ratio of the binder in the first region to the binder in the second region in the treated negative electrode plate is 0.1-1.4, which can effectively reduce the aggregation of the binder in the first region, reduce the direct current resistance of the battery, improve the performance of the battery, and also facilitates the improvement of the processing process of the negative electrode plate.

In some embodiments, the preparation method further includes a compaction treatment step, and the compaction treatment step is carried out before or after the negative electrode plate is treated by electromagnetic induction heating.

In some embodiments, the preparation method further includes a die-cutting treatment step, the die-cutting step is carried out after the compaction step, and the die-cutting treatment step is carried out before or after the treatment of the negative electrode plate by electromagnetic induction heating.

The step of treating the negative electrode plate by electromagnetic induction heating can be either before or after the compaction treatment step or the die-cutting treatment step. In both cases, the mass ratio of the binder in the first region to the binder in the second region can be 0.1-1.4 after the negative electrode plate is treated by electromagnetic induction heating.

### [Positive electrode plate]

The positive electrode plate includes a positive electrode current collector and a positive electrode film layer arranged on at least one surface of the positive electrode current collector, and the positive electrode film layer includes a positive electrode active material.

By way of example, the positive electrode current collector has two surfaces opposite to each other in a thickness direction of the positive electrode current collector, and the positive electrode film layer is arranged on either or both of the two opposite surfaces of the positive electrode current collector.

In some embodiments, the positive electrode current collector can be a metal foil or a composite current collector. For example, as the metal foil, an aluminum foil can be used. The composite current collector can include a polymer material substrate layer and a metal layer formed on at least one surface of the polymer material substrate layer. The composite current collector can be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), polyethylene (PE), etc.).

In some embodiments, the positive electrode active material can be a positive electrode active material well known in the art for batteries. For example, the positive electrode active material may include at least one of the following materials: a lithium-containing phosphate with an olivine structure, a lithium metal oxide, and respective modified compounds thereof. However, the present application is not limited to these materials. Other traditional materials that can be used as positive electrode active materials for batteries may alternatively be used. Only a single one of or a combination of two or more of these positive electrode active materials can be used. Examples of lithium metal oxides can include, but are not limited to, at least one of lithium cobalt oxide (e.g., LiCoO₂), lithium nickel oxide (e.g., LiNiO₂), lithium manganese oxide (e.g., LiMnO₂ and LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium nickel cobalt aluminum oxide (e.g., LiNi_{0.85}Co_{0.15}Al_{0.05}O₂), modified compounds thereof, etc. Examples of the lithium-containing phosphate with an olivine structure can include, but are not limited to, at least one of lithium iron phosphate (LiFePO₄ (also abbreviated as LFP)), a composite material of lithium iron phosphate and carbon, lithium manganese phosphate (such as LiMnPO₄), a composite material of lithium manganese phosphate and carbon, lithium iron manganese phosphate, and a composite material of lithium iron manganese phosphate and carbon.

In some embodiments, the positive electrode film layer further includes optionally a conductive agent. By way of example, the conductive agent can include at least one of superconducting carbon, acetylene black, carbon black, Ketjen black, carbon dots, carbon nanotubes, graphene, and carbon nanofibers.

In some embodiments, the positive electrode plate can be prepared by dispersing the above components for preparing the positive electrode plate, e.g., the positive electrode active material, the conductive agent, the binder, and any other components, in a solvent (e.g., N-methylpyrrolidone) to form a positive electrode slurry; and applying the positive electrode slurry to a positive electrode current collector, followed by processes such as drying and cold pressing to obtain the positive electrode plate.

### [Electrolyte]

The electrolyte plays a role in conducting ions between the positive electrode plate and negative electrode plate. The type of the electrolyte is not specifically limited in the present application and can be selected according to requirements. For example, the electrolyte can be liquid, gelled, or all solid.

In some embodiments, the electrolyte is an electrolyte solution. The electrolyte solution includes an electrolyte salt and a solvent.

In some embodiments, the electrolyte salt can be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further includes optionally an additive. For example, the additive can include a negative electrode film-forming additive and a positive electrode film-forming additive and can further include additives that can improve some properties of the battery, for example, an additive that improves the overcharging performance of the battery and an additive that improves the high-temperature or low-temperature performance of the battery.

### [Separator]

In some embodiments, the secondary battery further includes a separator. The type of the separator is not particularly limited in the present application, and any well-known separator with a porous structure having good chemical stability and mechanical stability can be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery can include an outer package. The outer package can be used for encapsulating the above electrode assembly and electrolyte.

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc.

### [Secondary battery]

In some embodiments, the secondary battery cell includes a positive electrode plate, an electrolyte solution, a separator, and in some embodiments a negative electrode plate.

In some embodiments, the positive electrode plate, the negative electrode plate, and the separator can be made into an electrode assembly by a winding process or a lamination process.

In some embodiments, the secondary battery includes one or more of a lithium secondary battery, a sodium secondary battery, and a potassium secondary battery.

In some embodiments, the secondary battery can include an outer package. The outer package can be used for encapsulating the above electrode assembly and electrolyte solution.

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc.

The shape of the secondary battery is not particularly limited in the present application, and the secondary battery can be cylindrical, prismatic, or in any other shape. For example, FIG. 2 is a secondary battery 5 with a prismatic structure as an example. The secondary battery may alternatively be a sodium-ion battery, a magnesium-ion battery, or a potassium-ion battery.

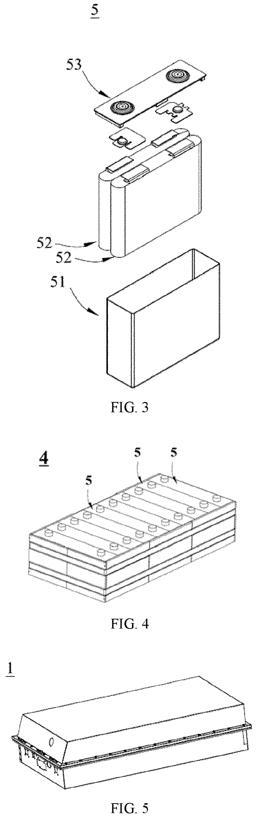

In some embodiments, referring to FIG. 3, the outer package can include a case 51 and a cover plate 53. The case 51 can include a bottom plate and a side plate connected to the bottom plate, and the bottom plate and the side plate enclose to form an accommodating cavity. The case 51 has an opening in communication with the accommodating cavity, and the cover plate 53 can cover the opening to close the accommodating cavity. The positive electrode plate, the negative electrode plate, and the separator can be made into an electrode assembly 52 by a winding process or a lamination process. The electrode assembly 52 is enclosed in the accommodating cavity. An electrolyte solution infiltrates into the electrode assembly 52. The number of electrode assemblies 52 contained in the secondary battery 5 can be one or more and can be selected by those skilled in the art according to specific actual requirements.

### [Battery module]

In some embodiments, the secondary battery can be assembled into a battery module. The number of secondary batteries contained in the battery module can one or more, and the specific number can be selected by those skilled in the art based on the application and capacity of the battery module.

FIG. 4 is a battery module 4 as an example. Referring to FIG. 4, in the battery module 4, a plurality of secondary batteries 5 may be sequentially arranged in a length direction of the battery module 4. Certainly, they can also be arranged in any other way. The plurality of secondary batteries 5 can be further fixed by fasteners.

Optionally, the battery module 4 can further include a shell having an accommodating space, in which the plurality of secondary batteries 5 are accommodated.

### [Battery pack]

In some embodiments, the above battery module can further be assembled into a battery pack. The number of battery modules contained in the battery pack can be one or more, and the specific number can be selected by those skilled in the art according to the application and capacity of the battery pack.

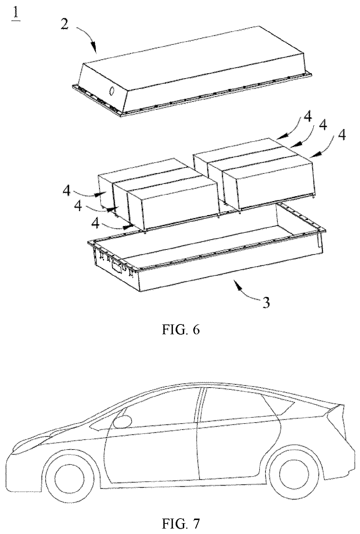

FIGs. 5 and 6 are a battery pack 1 as an example. Referring to FIGs. 5 and 6, the battery pack 1 can include a battery box and a plurality of battery modules 4 arranged in the battery box. The battery box includes an upper box 2 and a lower box 3. The upper box 2 can cover the lower box 3 to form an enclosed space for accommodating the battery module 4. The plurality of battery modules 4 can be arranged in the battery box in any manner.

### [Electrical apparatus]

In an embodiment of the present application, an electrical apparatus is provided, which includes at least one of a secondary battery according to any embodiment, a battery module according to any embodiment, or a battery pack according to any embodiment.

The electrical apparatus includes at least one of the secondary battery, battery module, or battery pack provided in the present application. The secondary battery, battery module, or battery pack can be used as a power source for the electrical apparatus, and can also be used as an energy storage unit for the electrical apparatus. The electrical apparatus can include, but is not limited to, a mobile device (for example, a mobile phone or a laptop), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the electrical apparatus, the secondary battery, battery module, or battery pack can be selected according to the requirements during use.

FIG. 7 is an electrical apparatus as an example. The electrical apparatus is an all-electric vehicle, a hybrid electric vehicle, a plug-in hybrid electric vehicle, etc. To satisfy the need of the electrical apparatus for a high power and high energy density of secondary batteries, a battery pack or a battery module can be used.

The device used as another example can be, for example, a mobile phone, a tablet computer, a laptop, etc. The device is generally required to be light and thin and can use a secondary battery as a power source.

### EXAMPLES

Embodiments of the present application will be described hereinafter. The embodiments described below are exemplary and only used to explain the present application, and should not be construed as a limitation on the present application. In embodiments in which no specific technologies or conditions are specified, technologies or conditions described in the literature in the art or product specifications are followed. The reagents or instruments used without manufacturer indicated are all commercially available conventional products.

### I. Preparation method

### Embodiment 1

### 1) Negative electrode plate

The negative electrode active material artificial graphite, the thickener hydroxymethylcellulose (CMC), and the binder styrene-butadiene rubber (SBR) were mixed in a weight ratio of 96.5 : 1.5 : 2.0 and dissolved in deionized water to prepare a negative electrode slurry. The negative electrode slurry was obtained under the action of a vacuum stirrer. The slurry was then applied to the surface of a copper foil. The copper foil was then transferred to a vacuum drying oven for full drying. The single side weight was 100 mg/1540.25 mm². Cold pressing was then carried out to obtain the negative electrode plate.

The negative electrode plate was treated by electromagnetic induction heating. The prepared negative electrode plate passed and moved through the inside of the electromagnetic induction coil. The distance S from the electromagnetic induction coil to the negative electrode plate located in the central position of the coil was 5 cm, and the moving speed V of the negative electrode plate was 20 m/min. The temperature T on the heated surface of the negative electrode plate was 700°C. Thus, a negative electrode plate treated by electromagnetic induction heating was obtained.

### 2) Preparation of positive electrode plate

1 wt% of the binder polyvinylidene fluoride was fully dissolved in N-methylpyrrolidone, and 1 wt% of the conductive agent carbon black and 98 wt% of the ternary positive electrode active material were then added, stirred, and uniformly mixed to obtain a positive electrode slurry. The slurry was uniformly applied to a surface of the positive electrode current collector aluminum foil to prepare a positive electrode film layer, and the positive electrode film layer was then transferred to a vacuum drying oven for full drying. The dried electrode plate was rolled and punched to obtain a positive electrode plate.

### 3) Electrolyte solution

In a glove box in an argon atmosphere (H₂O < 0.1 ppm and O₂ < 0.1 ppm), 30% of ethylene carbonate and 60% of dimethyl carbonate were uniformly mixed to obtain a mixed solvent. Then, 9% of the lithium salt lithium hexafluorophosphate was added and dissolved in the above mixed solvent, uniformly stirred, and mixed to prepare an electrolyte solution.

### 4) Separator

A polypropylene film was used as a separator.

### 5) Preparation of battery

The positive electrode plate, separator, and negative electrode plate were stacked sequentially, so that the separator was located between the positive electrode plate and the negative electrode plate for separation, and the bare battery core was welded with tabs. The bare battery core was packaged into an aluminum shell and baked at 80°C to remove water. The electrolyte solution was then immediately injected, and the opening was sealed to obtain an uncharged battery. The uncharged battery was then subjected to standing, hot and cold pressing, chemical formation, shaping, capacity test, and other procedures in sequence to obtain the lithium secondary battery product of Embodiment 1.

### Embodiments 2-17

The preparation methods for the batteries of Embodiments 2-17 were basically similar to that in Embodiment 1, except that the moving speed V of the negative electrode plate and/or the distance S between the coil and the negative electrode plate located at the central position inside the coil during electromagnetic induction heating were adjusted. The specific parameters are as shown in Table 1.

### Comparative Embodiment 1

The preparation method for the battery in Comparative Embodiment 1 was basically similar to that in Embodiment 1, except that the negative electrode plate was not heated by electromagnetic induction heating. The specific parameters are as shown in Table 1.

### Comparative Embodiments 2-5

The preparation methods for the battery in Comparative Embodiments 2-5 were basically similar to that in Embodiment 1, except that the distance S between the coil and the negative electrode plate located in the central position inside the coil and the moving speed V of the negative electrode plate during electromagnetic induction heating were controlled simultaneously, such that the value of S × V was lower than 30 or higher than 900. The specific parameters are as shown in Table 1.

### II. Performance test

### 1. Performance test for negative electrode plate

### 1) Test for the mass ratio of the binder in the first region to the binder in the second region

A differential scanning thermogravimetric analyzer was used for testing. The test instrument was STA449F3 differential scanning thermogravimetric analyzer, and the specific testing procedure was as follows: the thickness of the negative electrode film layer in the negative electrode plate was measured; a double-sided adhesive tape was taken to bind the surface of the negative electrode plate to be tested, a roller was then used to roll over the negative electrode plate three times in the same direction, the double-sided adhesive tape was peeled off, and the powder adhered to the tape was regarded as the powder of the first region (note: the thickness of the first region peeled off by the adhesive tape should be 1/2 of the thickness of the negative electrode film layer, and the specific operation involved measuring the thickness of the film layer remaining on the negative electrode plate. If the ratio of the thickness of the film layer remaining on the negative electrode plate to the thickness of the negative electrode film layer was less than 1/2, continued binding was carried out with the adhesive tape.); and the powder remaining on the negative electrode plate was scraped off gently with a scraper, and this part of powder was regarded as the powder in the second region, wherein care should be taken not to scrape the copper foil. The powders in the upper and lower layers were tested respectively according to the following steps to obtain the content of the binder in the upper and lower layers. The testing steps were as follows: about 50 mg of a sample was weighed into an Al₂O₃ crucible and shaken flat; parameter settings: nitrogen atmosphere, purge gas 60 mL/min, and shielding gas 20 mL/min; temperature program: 10°C/min, 35-600°C. It was ensured that the sample was fully dispersed, a thermogravimetric-temperature change graph was then plotted. The weight loss range of the binder was 300-600°C. The contents of the binder in the first region/second region were obtained. Thus, the mass ratio of the binder in the first region/second region was calculated.

### 2) Relative bonding force test

At 25°C, the prepared negative electrode plate was used as the electrode plate to be tested. A sample with width 30 mm * length 100-160 mm was cut out by a blade, and a special double-sided adhesive tape was adhered to a steel plate. The adhesive tape had width 20 mm * length 90-150 mm. The negative electrode film layer of the cut negative electrode plate sample was adhered to the double-sided adhesive tape and then rolled by a roller three times in the same direction. A paper tape having the same width as the electrode plate and a length greater than the sample length of 80-200 mm was fixed on the negative electrode current collector and secured with a crinkled tape. The power source of a tensile testing machine was turned on, and an indicator light was on. A position-limit block was adjusted to an appropriate position. An end of the steel plate without the electrode plate attached was fixed with a lower clamp. The paper tape was folded upward and fixed with an upper clamp. The position of the upper clamp was adjusted using "up" and "down" buttons on a manual controller attached to the tensile testing machine. A dedicated computer linked to the tensile testing machine was switched on, and a software icon on the desktop was double-clicked to initiate the test. The stretching rate was 50 m/min, and the test distance was 50 mm. One data point was taken by the software every 10 seconds. With these data point values as the ordinate and the corresponding test distance as the abscissa, the bonding force curve of the negative electrode plate was obtained. The force when the negative electrode plate was in force equilibrium divided by the width of the adhesive tape was taken as the bonding force of the negative electrode film layer per unit length to represent the bonding strength between the negative electrode film layer and the negative electrode current collector. For the data in Table 2, the bonding force of Embodiment 5 was used as the reference value (100%), and the other embodiments or comparative embodiments were all relative values with respect to the bonding force of Embodiment 5.

### 2. Battery performance test

### 1) Relative direct current resistance (DCR) test

At 25°C, the prepared battery was charged to 4.2 V at a constant current of 1 C and then charged to a current of 0.05 C at a constant voltage of 4.2 V. After standing for 5 min, the battery was discharged at a constant current of 1 C for 12 min, and the voltage V1 was recorded. After being left to stand for 5 min, the battery was placed at -10°C for 2 h and then discharged at 4 C for 10 seconds, and the voltage V2 was recorded. Thus, the direct current resistance DCR of the battery was derived from (V2-V1)/4C. For the data in Table 2, the internal resistance DCR of the battery of Embodiment 5 was used as the reference value (100%), and the other embodiments or comparative embodiments were all relative values with respect to the direct current resistance DCR of the battery of Embodiment 5.

### 2) Battery cycling capacity retention rate test

The process of testing the capacity retention rate of the battery was as follows: at 25°C, the prepared battery was charged to 4.3 V at a constant current of 1/3 C, then charged to a current of 0.05 C at a constant voltage of 4.3 V, left to stand for 5 min, and then discharged to 2.8 V at 1/3 C, and the obtained capacity was recorded as the initial capacity C0. The above steps were repeated for the above same battery, and at the same time the discharge capacity Cn of the battery after the nth cycle was recorded. Thus, after each cycle, the capacity retention rate of the battery was Pn = Cn / C0 × 100%. With the 300 point values of P1, P2 ...... 300 as the ordinate and the corresponding numbers of cycles as the abscissa, a graph of the capacity retention rate of the battery versus the number of cycles was obtained. During the testing process, the first cycle corresponded to n = 1, the second cycle corresponded to n = 2, ...... and the 300th cycle corresponded to n = 300. The capacity retention rate data of the batteries corresponding to the embodiments or comparative embodiments in Table 2 are the data measured after 300 cycles under the above test conditions, i.e., the value of P300. The test process of the comparative embodiments and the other embodiments were the same as above.

### III. Analysis of test results of embodiments and comparative embodiments

The battery of each of the embodiments and comparative embodiments were prepared separately according to the above method, and the various performance parameters were measured. The results are shown in Tables 1 and 2 below.

**Table 1**

| No. | Electromagnetic induction heating | | | |
|---|---|---|---|---|
| | Surface temperature of negative electrode plate T/°C | Distance between coil and negative electrode plate S/cm | Moving speed of negative electrode plate V/(m/min) | S × V |
| Embodiment 1 | 700.2 | 5 | 20 | 100 |
| Embodiment 2 | 598.3 | 5 | 40 | 200 |
| Embodiment 3 | 548.7 | 5 | 50 | 250 |
| Embodiment 4 | 456.4 | 5 | 70 | 350 |
| Embodiment 5 | 401.8 | 5 | 80 | 400 |
| Embodiment 6 | 350.5 | 5 | 100 | 500 |
| Embodiment 7 | 310.2 | 5 | 130 | 650 |
| Embodiment 8 | 299.6 | 5 | 150 | 750 |
| Embodiment 9 | 300.3 | 1 | 180 | 180 |
| Embodiment 10 | 703.2 | 1 | 70 | 70 |
| Embodiment 11 | 652.7 | 2 | 70 | 140 |
| Embodiment 12 | 526.9 | 4 | 70 | 280 |
| Embodiment 13 | 387.4 | 6 | 70 | 420 |
| Embodiment 14 | 321.8 | 8 | 70 | 560 |
| Embodiment 15 | 302.1 | 10 | 70 | 700 |
| Embodiment 16 | 298.2 | 12 | 70 | 840 |
| Embodiment 17 | 699.7 | 12 | 10 | 120 |
| Comparative Embodiment 1 | / | / | / | / |
| Comparative Embodiment 2 | 749.8 | 5 | 5 | 25 |
| Comparative Embodiment 3 | 251.2 | 5 | 200 | 1000 |
| Comparative Embodiment 4 | 199.3 | 15 | 70 | 1050 |
| Comparative Embodiment 5 | 800.4 | 0.1 | 70 | 7 |

**Table 2**

| No. | Negative electrode plate | | Battery | |
|---|---|---|---|---|
| | Mass ratio of binder in first region to binder in second region | Relative bonding force value | Relative DCR value | Capacity retention rate after 300 cycles |
| Embodiment 1 | 0.48 | 923% | 40.6% | 96.2% |
| Embodiment 2 | 0.61 | 96.2% | 60.1% | 96.8% |
| Embodiment 3 | 0.72 | 98.5% | 70.9% | 96.0% |
| Embodiment 4 | 0.93 | 100.5% | 90.3% | 96.1% |
| Embodiment 5 | 1.14 | 100.0% | 100.0% | 96.0% |
| Embodiment 6 | 1.16 | 100.1% | 135.5% | 95.3% |
| Embodiment 7 | 1.23 | 100.7% | 143.3% | 95.0% |
| Embodiment 8 | 1.37 | 100.4% | 160.7% | 95.2% |
| Embodiment 9 | 1.38 | 100.3% | 161.8% | 95.1% |
| Embodiment 10 | 0.49 | 92.4% | 42.1% | 96.0% |
| Embodiment 11 | 0.58 | 95.7% | 56.9% | 96.5% |
| Embodiment 12 | 0.79 | 99.0% | 72.4% | 96.2% |
| Embodiment 13 | 1.17 | 100.1% | 105.3% | 95.8% |
| Embodiment 14 | 1.24 | 99.7% | 139.7% | 95.5% |
| Embodiment 15 | 1.31 | 100.2% | 149.8% | 95.3% |
| Embodiment 16 | 1.35 | 100.1% | 156.8% | 95.4% |
| Embodiment 17 | 0.47 | 92.9% | 40.1% | 96.5% |
| Comparative Embodiment 1 | 2.03 | 100.4% | 200.2% | 93.5% |
| Comparative Embodiment 2 | 0.06 | 30.0% | 400.5% | 82.1% |
| Comparative Embodiment 3 | 1.81 | 100.6% | 180.9% | 90.0% |
| Comparative Embodiment 4 | 1.92 | 99.8% | 197.1% | 91.2% |
| Comparative Embodiment 5 | 0.01 | 25.3% | 401.2% | 83.1% |

As can be seen from the above results, the negative electrode plates in Embodiments 1-17 include a negative electrode current collector and a negative electrode film layer located on at least one side of the negative electrode current collector. The negative electrode film layer includes a binder, wherein the negative electrode film layer includes a first region and a second region, and the mass ratio of the binder in the first region to the binder in the second region is 0.1-1.4. The first region is a region that extends from a surface on a side of the negative electrode film layer away from the negative electrode current collector towards the interior of the negative electrode film layer by a distance within h/2, the second region is a region that extends from a surface on a side of the negative electrode film layer close to the negative electrode current collector towards the first region by a distance within h/2, and h represents a thickness of the negative electrode film layer.

As can be seen by comparing Embodiments 1-17 with Comparative Embodiment 1, treating the negative electrode plate by electromagnetic induction heating is beneficial to reducing the direct current resistance of the battery and improving the cycling performance of the battery.

As can be seen by comparing Embodiments 1-17 with Comparative Embodiments 2-5, the mass ratio of the binder in the first region to the binder in the second region in the negative electrode plate was controlled to be 0.1-1.4, which is beneficial to reducing the direct current resistance of the battery and improving the cycling performance of the battery while the binding performance of the negative electrode plate is maintained.

As can be seen by comparing Embodiments 1-8 with Comparative Embodiments 2-3, when the distance S between the coil and the negative electrode plate located in the central position inside the coil is 5 cm, the moving speed V of the negative electrode plate inside the energized coil is too high or too low, which causes the surface temperature of the negative electrode plate to be lower than 300°C or higher than 730°C. The surface temperature of the negative electrode plate of lower than 300°C is detrimental to the removal of the styrene-butadiene rubber SBR in the first region, and the surface temperature of the negative electrode plate of higher than 730°C may cause the decomposition of the negative electrode active material, thereby affecting the electrical performance of the battery. Controlling the moving speed of the negative electrode plate in an appropriate range can not only remove the styrene-butadiene rubber SBR in the first region, but can also reduce the influence on the negative electrode active material.

As can be seem by comparing Embodiments 4 and 10-16 with Comparative Embodiments 4-5, when the moving speed V of the negative electrode plate inside the energized coil is 70 m/min, the distance S between the coil and the negative electrode plate located in the central position inside the coil is too high or too low, which causes the surface temperature of the negative electrode plate to be lower than 300°C or higher than 730°C. The surface temperature of the negative electrode plate of lower than 300°C is detrimental to the removal of the styrene-butadiene rubber SBR in the first region, and the surface temperature of the negative electrode plate to be higher than 730°C may cause the decomposition of the negative electrode active material, thereby affecting the electrical performance of the battery. Controlling the moving speed of the negative electrode plate in an appropriate range can not only remove the styrene-butadiene rubber SBR in the first region, but can also reduce the influence on the negative electrode active material.

As can be seen by comparing Embodiments 1-17 with Comparative Embodiments 1-5, during the treatment of the negative electrode plate by electromagnetic induction heating, the distance S between the coil and the negative electrode plate located in the central position inside the coil is controlled to be 1-12 cm, so that the mass ratio of the binder in the first region to the binder in the second region in the treated negative electrode plate being 0.1-1.4 can be achieved, thereby reducing the direct current resistance of the battery and improving the cycling performance of the battery.

As can be seen by comparing Embodiments 1-17 with Comparative Embodiments 1-5, during the treatment of the negative electrode plate by electromagnetic induction heating, the moving speed V of the negative electrode plate inside the energized coil is 10-180 m/min, so that the mass ratio of the binder in the first region to the binder in the second region in the treated negative electrode plate being 0.1-1.4 can be achieved, thereby reducing the direct current resistance of the battery and improving the cycling performance of the battery.

As can be seen by comparing Embodiments 1-17 with Comparative Embodiments 1-5, during the treatment of the negative electrode plate by electromagnetic induction heating, the surface temperature T on the side of the negative electrode plate away from the negative electrode current collector is controlled to be 300-700°C, so that the mass ratio of the binder in the first region to the binder in the second region in the treated negative electrode plate being 0.1-1.4 can be achieved, thereby reducing the direct current resistance of the battery and improving the cycling performance of the battery.

It needs to be noted that the present application is not limited to the above embodiments. The above embodiments are only illustrative, and the embodiments within the scope of the technical solution of the present application that have substantively the same composition and the same role and effect as the technical idea are all included in the technical scope of the present application. In addition, within the scope of not departing from the gist of the present application, various variations made to the embodiments that are conceivable to those skilled in the art and other modes constructed by combining some constituent elements of the embodiment are also included in the scope of the present application.

## Claims

1. A negative electrode plate, wherein the negative electrode plate comprises a negative electrode current collector and a negative electrode film layer located on at least one side of the negative electrode current collector, the negative electrode film layer comprising a binder;
wherein the negative electrode film layer comprises a first region and a second region, the mass ratio of the binder in the first region to the binder in the second region is 0.1-1.4, the first region is a region that extends from a surface on a side of the negative electrode film layer away from the negative electrode current collector towards the interior of the negative electrode film layer by a distance within h/2, the second region is a region that extends from a surface on a side of the negative electrode film layer close to the negative electrode current collector towards the first region by a distance within h/2, and h represents a thickness of the negative electrode film layer.

2. The negative electrode plate according to claim 1, wherein the mass ratio of the binder in the first region to the binder in the second region is 0.6-1.

3. The negative electrode plate according to claim 1 or 2, wherein the binder comprises a water-based binder, and the water-based binder comprises one or more of styrene-butadiene rubber, polyamide, poly(acrylonitrile-acrylate), polyacrylate, and poly(styrene-acrylate); optionally, the water-based binder comprises styrene-butadiene rubber.

4. The negative electrode plate according to any one of claims 1 to 3, wherein the negative electrode plate is a negative electrode plate treated by electromagnetic induction heating.

5. The negative electrode plate according to any one of claims 1 to 4, wherein based on the total mass of the negative electrode film layer, the mass content of the binder in the first region is 0.18%-2%, optionally 0.3%-1%, and the mass content of the binder in the second region is 0.32%-3%, optionally 0.7%-2%; and/or
based on the total mass of the negative electrode film layer, the sum of the mass content of the binder in the first region and the mass content of the binder in the second region is 0.5%-5%, optionally 1%-3%.

6. The negative electrode plate according to any one of claims 1 to 5, wherein the negative electrode film layer further comprises a negative electrode active material, and the negative electrode active material comprises one or more of artificial graphite, natural graphite, soft carbon, hard carbon, a silicon-carbon composite, lithium titanate, and a silicon-oxygen composite.

7. A method for preparing a negative electrode plate, comprising:
preparing a negative electrode film layer on at least one side of a negative electrode current collector to obtain the negative electrode plate;
wherein the negative electrode film layer comprises a first region and a second region, the mass ratio of the binder in the first region to the binder in the second region is 0.1-1.4, the first region is a region that extends from a surface on a side of the negative electrode film layer away from the negative electrode current collector towards the interior of the negative electrode film layer by a distance within h/2, the second region is a region that extends from a surface on a side of the negative electrode film layer close to the negative electrode current collector towards the first region by a distance within h/2, and h represents a thickness of the negative electrode film layer.

8. The preparation method according to claim 7, wherein the step of preparing the negative electrode film layer on the at least one side of the negative electrode current collector to obtain the negative electrode plate comprises:
preparing the negative electrode film layer on at least one side of the negative electrode current collector to obtain the negative electrode plate; and
treating the negative electrode plate by electromagnetic induction heating to obtain the negative electrode plate treated by the electromagnetic induction heating.

9. The preparation method according to claim 8, wherein before the negative electrode plate is treated by the electromagnetic induction heating, the mass ratio of the binder in the first region to the binder in the second region is 1.5-10.

10. The preparation method according to claim 8 or 9, wherein the treatment of the negative electrode plate by the electromagnetic induction heating comprises:
moving the negative electrode plate inside an energized coil.

11. The preparation method according to any one of claims 8 to 10, wherein during the treatment of the negative electrode plate by electromagnetic induction heating, the distance S between the coil and the negative electrode plate located in the central position inside the coil and the moving speed V of the negative electrode plate inside the energized coil satisfy 50 ≤ S × V ≤ 900, optionally, 100 ≤ S × V ≤ 800, wherein S represents the shortest distance between the coil and the negative electrode plate located in the central position inside the coil along a thickness direction of the negative electrode plate, the unit of S is cm, and the unit of V is m/min.

12. The preparation method according to claim 10 or 11, wherein the distance S between the coil and the negative electrode plate located in the central position inside the coil is 1-12 cm, optionally 5-10 cm.

13. The preparation method according to any one of claims 10 to 12, wherein during the treatment of the negative electrode plate by the electromagnetic induction heating, the moving speed V of the negative electrode plate inside the energized coil is 10-180 m/min, optionally 20-150 m/min.

14. The preparation method according to any one of claims 8 to 13, wherein during the treatment of the negative electrode plate by the electromagnetic induction heating, the surface temperature T on the side of the negative electrode plate away from the negative electrode current collector is 300-700°C, optionally 400-700°C.

15. The preparation method according to any one of claims 10 to 14, wherein the specific steps comprise:
uniformly mixing raw materials comprising a negative electrode active material and a binder with deionized water to prepare a negative electrode slurry, and applying the negative electrode slurry to a negative electrode current collector to prepare the negative electrode film layer, thereby obtaining the negative electrode plate; optionally, the raw materials further comprise sodium carboxymethyl cellulose; and
moving the negative electrode plate inside the energized coil to obtain the negative electrode plate treated by the electromagnetic induction heating.

16. The preparation method according to any one of claims 8 to 15, wherein the preparation method further comprises a compaction treatment step, and the compaction treatment step is carried out before or after the negative electrode plate is treated by the electromagnetic induction heating.

17. The preparation method according to any one of claims 8 to 16, wherein the preparation method further comprises a die-cutting treatment step, the die-cutting step is carried out after the compaction step, and the die-cutting treatment step is carried out before or after the treatment of the negative electrode plate by the electromagnetic induction heating.

18. A secondary battery, comprising the negative electrode plate according to any one of claims 1 to 6 or a negative electrode plate prepared by the preparation method according to any one of claims 7 to 17.

19. The secondary battery according to claim 18, wherein the secondary battery comprises one or more of a lithium secondary battery, a sodium secondary battery, and a potassium secondary battery.

20. An electrical apparatus, comprising the secondary battery according to claim 18 or 19.
